# EUROPEAN PATENT APPLICATION

(11) **EP 4 560 605 A1**
(43) Date of publication of application: **28.05.2025**
(21) Application number: 24215608.1
(22) Date of filing: 26.11.2024
(51) Int. Cl.: G09B 9/08, G09B 9/20, G09B 9/00

(54) **AI-DRIVEN SIMULATED TRAFFIC CONTROLLER SYSTEM AND METHOD**

(30) Priority: 27.11.2023 US 202363602813 P
(71) Applicant: CAE Inc., Saint-Laurent, Québec H4T 1G6 (CA)
(72) Inventor: Delisle, Jean-Francois, Saint-Laurent, H4T 1G6 (CA); Riendeau, Simon, Saint-Laurent, H4T 1G6 (CA); Mars, Cloderic, Montreal, H2Y 2G1 (CA); Kurandwad, Sagar, Montreal, H2Y 2G1 (CA)
(74) Representative: Oancea, Andreas Christian

(57) **Abstract**

A multi-agent computerized simulation system for training a user to operate a vehicle comprises an interactive computerized simulation station having tangible instrumentation enabling the user to control a simulated vehicle in a multi-agent simulation, a memory storing simulation data for the multi-agent simulation, and a processor configured to execute the multi-agent simulation. The simulation provides a simulated traffic controller having a traffic controller artificial intelligence that interacts verbally with the user to coordinate movement of the simulated vehicle. The simulation also provides one or more simulated external vehicles that simulate one or more external vehicles whose movement is scripted deterministically in the simulation. Alternatively, each simulated external vehicle is operated by an autonomous agent having AI controlling the simulated external vehicle by making observations and decisions and by reacting to verbal instructions received by the simulated traffic controller.

## Description

### TECHNICAL FIELD

The present invention relates generally to computerized simulation systems for simulation-based training and, more specifically, to computerized simulation systems that employ artificial intelligence to simulate one or more agents in the simulation.

### BACKGROUND

Simulation-based training is used to train students in how to operate vehicles such as, for example, how to pilot an aircraft. Interactive simulation stations, mixed-reality and virtual reality devices can be used to provide students with an immersive simulation enabling the student to manipulate instrumentation to control a simulated vehicle in a simulated environment.

With the advent of urban air mobility, particularly electric vertical takeoff and landing (eVTOL) aircraft, there is an impetus to develop simulation training systems to train new pilots in operating such aircraft in an efficient and efficacious manner. Due to the projected high demand and the generally smaller size of eVTOL aircraft, there will likely be a very high volume of takeoffs and landings as well as a high density of eVTOL aircraft operating in the airspace around airfields or airports, also known as vertiports in the context of eVTOL aircraft. Both the operational density and higher overall volume mean that prospective eVTOL pilots require training in operating in such environments, both in terms of more acute situational awareness of other nearby aircraft and also interacting with air traffic control (ATC).

A technical solution to this problem would thus be highly desirable.

### SUMMARY

In general, the present invention provides a computerized system, method and computer-readable medium for multi-agent simulation of a vehicle (such as, for example, an aircraft) for training a user to operate the vehicle. The multi-agent simulation includes a traffic controller having a traffic controller artificial intelligence and optionally a cognitive agent (or cognitive assistant) such as, for example, a virtual co-pilot for assisting the user in operating the vehicle in the simulation. The simulation may have one or more computer-generated forces (CFG) entities whose movement is deterministically scripted. Optionally, the simulation includes one or more autonomous agents having respective artificial intelligence for operating one or more respective simulated external vehicles. Having been trained using reinforcement learning, the traffic controller (and optionally other agents in the simulation such as the virtual co-pilot) act autonomously to make observations and decisions on their own. The user trains to operate the vehicle in a simulator that runs the multi-agent simulation by interacting verbally with the simulated traffic controller which in turn also interacts with the autonomous agents such as the optional virtual pilot and/or autonomous agents controlling the simulated external vehicles. The traffic controller thus coordinate movements for one or more of these various simulation vehicles in the simulation. In the context of flight simulation, the traffic controller is an air traffic controller and the various vehicles are aircraft.

One aspect of the disclosure is a multi-agent computerized simulation system for training a user to operate a vehicle. The system includes an interactive computerized simulation station for providing a multi-agent simulation to train the user in how to operate the vehicle, the interactive computerized simulation station having tangible instrumentation enabling the user to control a simulated vehicle in the multi-agent simulation. The system includes a memory storing simulation data for the multi-agent simulation and a processor communicatively coupled to the memory and configured to execute the multi-agent simulation by providing a simulated traffic controller having a traffic controller artificial intelligence for interacting verbally with the user via the simulation to coordinate movement of the simulated vehicle. The simulation also provides one or more simulated external vehicles that simulate one or more external vehicles being whose movement in the multi-agent simulation is scripted deterministically.

Another aspect of the disclosure is a non-transitory computer-readable medium storing code which when executed by a processor of a computing device causes the computing deice to provide a multi-agent simulation via an interactive computerized simulation station having tangible instrumentation enabling a user to control a simulated vehicle. The code also provides a simulated traffic controller having a traffic controller artificial intelligence for interacting verbally with the user via the multi-agent simulation to coordinate movement of the simulated vehicle. The code also provides one or more simulated external vehicles whose movement in the simulation is scripted deterministically.

Another aspect of the disclosure is a computer-implemented method of providing simulation training to a user. The method entails providing a multi-agent simulation to the user via an interactive computerized simulation station having tangible instrumentation enabling the user to control a simulated vehicle. The method entails providing a simulated traffic controller having a traffic controller artificial intelligence for interacting verbally with the user via the multi-agent simulation to coordinate movement of the simulated vehicle. The method entails providing one or more simulated external vehicles whose movement in the simulation is scripted determ inistically.

Another aspect of the disclosure is a multi-agent computerized simulation system for training a user to operate a vehicle. The system includes an interactive computerized simulation station for providing a multi-agent simulation to train the user in how to operate the vehicle, the interactive computerized simulation station having tangible instrumentation enabling the user to control a simulated vehicle in the multi-agent simulation. The system includes a memory storing simulation data for the multi-agent simulation. The system includes a processor communicatively coupled to the memory and configured to execute the multi-agent simulation by providing a simulated traffic controller having a traffic controller artificial intelligence for interacting verbally with the user via the simulation to coordinate movement of the simulated vehicle. The simulation also provides one or more simulated external vehicles that simulate one or more external vehicles, each simulated external vehicle being operated by an autonomous agent having an autonomous agent artificial intelligence for controlling the simulated external vehicle whose movement in the multi-agent simulation is determined by observations and decisions made by the autonomous agent artificial intelligence and by reacting to one or more verbal instructions received by the simulated traffic controller.

Another aspect of the disclosure is a non-transitory computer-readable medium storing code which when executed by a processor of a computing device causes the computing deice to provide a multi-agent simulation via an interactive computerized simulation station having tangible instrumentation enabling a user to control a simulated vehicle. The code also causes the computing device to provide a simulated traffic controller having a traffic controller artificial intelligence for interacting verbally with the user via the multi-agent simulation to coordinate movement of the simulated vehicle. The code also causes the computing device to provide one or more simulated external vehicles that simulate one or more external vehicles, each simulated external vehicle being operated by an autonomous agent having an autonomous agent artificial intelligence for controlling the simulated external vehicle whose movement in the multi-agent simulation is determined by observations and decisions made by the autonomous agent artificial intelligence and by reacting to one or more verbal instructions received by the simulated traffic controller.

Another aspect of the disclosure is a computer-implemented method of providing simulation training to a user. The method entails providing a multi-agent simulation via an interactive computerized simulation station having tangible instrumentation enabling the user to control a simulated vehicle. The method further entails providing a simulated traffic controller having a traffic controller artificial intelligence for interacting verbally with the user via the multi-agent simulation to coordinate movement of the simulated vehicle. The method further entails providing one or more simulated external vehicles that simulate one or more external vehicles, each simulated external vehicle being operated by an autonomous agent having an autonomous agent artificial intelligence for controlling the simulated external vehicle whose movement in the multi-agent simulation is determined by observations and decisions made by the autonomous agent artificial intelligence and by reacting to one or more verbal instructions received by the simulated traffic controller.

Another aspect of the disclosure is a non-transitory computer-readable medium storing code which when executed by a processor of a computing device causes the computing device to provide a simulated traffic controller within a multi-agent simulation provided by a multi-agent computerized simulation system for training a user to operate a vehicle. The non-transitory computer-readable medium comprises code implementing a traffic controller artificial intelligence for interacting verbally with the user via the multi-agent simulation to coordinate movement of a simulated vehicle controlled using tangible instrumentation in an interactive computerized simulation station by the user. The non-transitory computer-readable medium also comprises code for interacting with one or more autonomous agents of one or more simulated external vehicles that simulate one or more external vehicles, each autonomous agent having an autonomous agent artificial intelligence for controlling a respective simulated external vehicle whose movement in the multi-agent simulation is determined by observations and decisions made by the autonomous agent artificial intelligence and by reacting to one or more verbal instructions received by the simulated traffic controller.

Yet another aspect of the disclosure is a multi-agent computerized simulation system for providing a multi-agent simulation for training a user to operate a vehicle. The system comprises an interactive computerized simulation station having tangible instrumentation enabling the user to control a simulated vehicle in the multi-agent simulation. The system comprises a memory storing simulation data for the multi-agent simulation. The system further comprises a processor communicatively coupled to the memory and configured to execute the multi-agent simulation by providing a simulated traffic controller having a traffic controller artificial intelligence for coordinating movements of the simulated vehicle and the one or more simulated external vehicles by communicating with the user and with one or more autonomous agents operating the one or more simulated external vehicles, each autonomous agent having an autonomous agent artificial intelligence for controlling a respective simulated external vehicle. The traffic controller artificial intelligence is trained using reinforcement learning by observing the actions of the simulated vehicle and the one or more simulated external vehicles taken in response to instructions from the simulated traffic controller and by rewarding or penalizing the traffic controller artificial intelligence based on the actions.

Yet another aspect of the disclosure is a computer-implemented method of providing simulation training to a user. The method entails providing a simulated traffic controller for interacting verbally with the user in the simulation and providing a traffic controller artificial intelligence for the simulated traffic controller to coordinate movement of the simulated vehicle with the user while the user uses tangible instrumentation in an interactive computerized simulation station.

Yet another aspect of the disclosure is a non-transitory computer-readable medium storing code which when executed by a processor of a computing device causes the computing device to provide a simulated traffic controller within a multi-agent simulation provided by a multi-agent computerized simulation system for training a user to operate a vehicle. The non-transitory computer-readable medium comprises code implementing a traffic controller artificial intelligence for interacting verbally with the user via the multi-agent simulation to coordinate movement of a simulated vehicle controlled using tangible instrumentation in an interactive computerized simulation station by the user. The non-transitory computer-readable medium also comprises code for interacting with one or more autonomous agents of one or more simulated external vehicles that simulate one or more external vehicles, each autonomous agent having an autonomous agent artificial intelligence for controlling a respective simulated external vehicle whose movement in the multi-agent simulation is determined by observations and decisions made by the autonomous agent artificial intelligence and by reacting to one or more verbal instructions received by the simulated traffic controller.

Yet another aspect of the disclosure is a multi-agent computerized simulation system for providing a multi-agent simulation for training a user to operate a vehicle. The system includes an interactive computerized simulation station having tangible instrumentation enabling the user to control a simulated vehicle in the multi-agent simulation. The system includes a memory storing simulation data for the multi-agent simulation and a processor communicatively coupled to the memory and configured to execute the multi-agent simulation. The simulation provides providing a simulated traffic controller having a traffic controller artificial intelligence for coordinating movements of the simulated vehicle and the one or more simulated external vehicles by communicating with the user and with one or more autonomous agents operating the one or more simulated external vehicles, each autonomous agent having an autonomous agent artificial intelligence for controlling a respective simulated external vehicle. The traffic controller artificial intelligence is trained using reinforcement learning by observing the actions of the simulated vehicle and the one or more simulated external vehicles taken in response to instructions from the simulated traffic controller and by rewarding or penalizing the traffic controller artificial intelligence based on the actions.

Yet another aspect of the disclosure is a computer-implemented method of providing simulation training to a user. The method entails implementing a traffic controller artificial intelligence for interacting verbally with the user via the multi-agent simulation to coordinate movement of a simulated vehicle controlled using tangible instrumentation in an interactive computerized simulation station by the user. The method further entails interacting with one or more autonomous agents of one or more simulated external vehicles that simulate one or more external vehicles, each autonomous agent having an autonomous agent artificial intelligence for controlling a respective simulated external vehicle whose movement in the multi-agent simulation is determined by observations and decisions made by the autonomous agent artificial intelligence and by reacting to one or more verbal instructions received by the simulated traffic controller.

Yet another aspect of the disclosure is non-transitory computer-readable medium storing code which when executed by a processor of a computing device causes the computing device to provide a virtual co-pilot that cooperates with a user controlling a simulated vehicle within a simulation provided by a multi-agent computerized simulation system for training the user to operate the vehicle. The non-transitory computer-readable medium comprises code implementing a virtual co-pilot artificial intelligence for making observations and decisions independently of the user controlling the simulated vehicle, code for interacting verbally with the user via the simulation while the user is controlling the simulated vehicle using tangible instrumentation in an interactive computerized simulation station and code for interacting verbally with a simulated traffic controller in order to coordinate movement of the simulated vehicle by the user.

Yet a further aspect of the disclosure is multi-agent computerized simulation system for providing a multi-agent simulation for training a user to operate a vehicle. The system comprises an interactive computerized simulation station having tangible instrumentation enabling the user to control a simulated vehicle in the multi-agent simulation, a memory storing simulation data for the multi-agent simulation, and a processor communicatively coupled to the memory and configured to execute the multi-agent simulation by providing a virtual co-pilot having a virtual co-pilot artificial intelligence for co-piloting the simulated vehicle with the user. The virtual co-pilot artificial intelligence is trained using reinforcement learning by observing the simulated vehicle in response to actions taken by the virtual co-pilot artificial intelligence and by rewarding or penalizing the virtual co-pilot artificial intelligence based on the actions.

Yet a further aspect of the disclosure is a computer-implemented method of providing simulation training to a user. The method entails implementing a virtual co-pilot artificial intelligence for making observations and decisions independently of the user controlling the simulated vehicle, interacting verbally with the user via the simulation while the user is controlling the simulated vehicle using tangible instrumentation in an interactive computerized simulation station and interacting verbally with a simulated traffic controller in order to coordinate movement of the simulated vehicle by the user.

Yet another aspect of the disclosure is a computerized simulation system for training a pilot to operate a vehicle with the guidance of a traffic controller. The system includes a memory storing a machine learning model trained to generate traffic control instructions based on the state of the vehicle and pilot communications, a processor communicatively coupled to the memory and an interactive computerized simulation station operable by the pilot to control a simulation model of the vehicle. The processor is configured to perform iteratively and in real-time the steps of inputting situational data into the machine learning model to generate simulated traffic control instructions, the situational data comprising a state of the simulation model and a pilot communication recorded by the station while the pilot operates the station, and providing the simulated traffic control instructions to the station for communication to the pilot.

The foregoing presents a simplified summary of the invention in order to provide a basic understanding of some aspects of the invention. This summary is not an exhaustive overview of the invention. It is not intended to identify essential, key or critical elements of the invention or to delineate the scope of the invention. Its sole purpose is to present some concepts in a simplified form as a prelude to the more detailed description that is discussed later. Other aspects of the invention are described below in relation to the accompanying drawings.

### BRIEF DESCRIPTION OF THE DRAWINGS

Further features and advantages of the present technology will become apparent from the following detailed description, taken in combination with the appended drawings, in which:
FIG. 1 schematically depicts an AI-driven multi-agent computerized simulation system in accordance with an embodiment of the present invention;
FIG. 2 schematically depicts a simulation system having an interactive computerized simulation station that may be used in the system of FIG. 1;
FIG. 3 depicts a flight simulation for an eVTOL aircraft in which there are multiple autonomous agents having respective AI for controlling respective simulated eVTOL aircraft as well as a simulated air traffic controller controlled by AI for coordinating traffic in the flight simulation;
FIG. 4 depicts an example of verbal interactions within a flight simulation between a user flying a simulated eVTOL aircraft and the simulated air traffic controller;
FIG. 5 depicts a high-level architecture of a cognitive assistant in accordance with an embodiment of the present invention;
FIG. 6 depicts a high-level architecture of a simulated air traffic controller in accordance with an embodiment of the present invention;
FIG. 7 depicts components of the multi-agent simulation software architecture for one implementation.
FIG. 8 depicts components of an AI-driven micro-service architecture for one implementation.
FIG. 9 depicts an internal architecture of an AI-driven air traffic controller leveraging Advantage Actor Critic (A2C) for one implementation.
FIG. 10 depicts an air traffic controller A2C network architecture for one implementation.

It will be noted that throughout the appended drawings, like features are identified by like reference numerals.

### DETAILED DESCRIPTION

In general, the exemplary embodiments disclosed in this specification provide a multi-agent simulation that includes a simulated traffic controller having a traffic controller artificial intelligence for interacting verbally with the user via the simulation to coordinate movement of the simulated vehicle and one or more simulated external vehicles that simulate one or more external vehicles. In one implementation, simulated external vehicles are computer-generated forces (CGF) entities whose movement is scripted deterministically. In other implementation, each simulated external vehicle is operated by an autonomous agent having an autonomous agent artificial intelligence for controlling the simulated external vehicle whose movement in the multi-agent simulation is determined by observations and decisions made by the autonomous agent artificial intelligence and by reacting to one or more verbal instructions received by the simulated traffic controller. In a further implementation, at least one of the simulated external vehicles is AI-driven while at least one other of the simulated external vehicles has deterministically scripted behavior. In the exemplary embodiments, the simulated vehicle is a simulated aircraft and the simulated traffic controller is a simulated air traffic controller located at a fixed virtual location at a virtual airfield in the simulation. In this embodiment, the simulation is a flight simulation. The user interacts in the simulation with the air traffic controller. The air traffic controller (ATC) also interacts with (deterministically scripted) CGF entities or autonomous agents controlling respective other vehicles (simulated external vehicles). In a simulation in which the simulated external vehicles and the air traffic controller and optional cognitive assistant (e.g. virtual co-pilot) are autonomous agents, this is referred to herein as a multi-agent simulation. Each agent makes its own observations and takes its own actions autonomously using its own artificial intelligence (AI) although it will be appreciated that in some implementations one or more of the external vehicles may have behaviour that is deterministically scripted. The AI of each autonomous agent flying a simulated external vehicle makes its own observations and decisions to fly its own aircraft. The ATC is also autonomous and makes its own observations and decisions. The cognitive agent (e.g. virtual co-pilot) can also make its own observations and decisions. The ATC AI is trained using reinforcement learning (RL). The cognitive agent can also be RL-trained. The autonomous agents operating the simulated external vehicles may be trained using reinforcement learning. Multi-agent reinforcement learning (MARL) may also be used to enable the multiple agents to learn by interacting with other agents in the simulation environment.

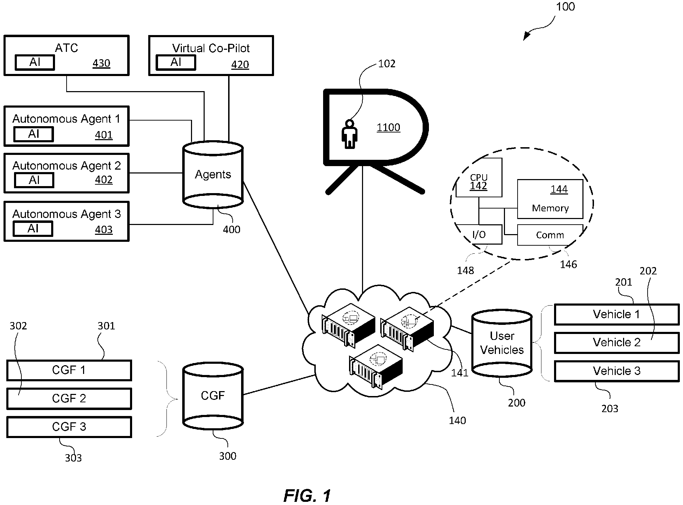

FIG. 1 depicts a computerized system for training a student to operate a vehicle (i.e. an actual physical real-world) vehicle in accordance with an embodiment of the present invention. In this specification, the expression "vehicle" or "actual vehicle" is used to distinguish from a simulated vehicle that is simulated in a computer simulation to function like the actual vehicle to thereby train the student in the operation of the actual vehicle. The simulated vehicle is also referred to as a simulation model of the vehicle. A flight simulator that simulates the operation of an actual aircraft is one example. The student is a person seeking to learn to operate the actual vehicle, i.e., a physical and tangible (real-world) vehicle. The actual vehicle may be any vehicle such as an aircraft, ship, spacecraft or the like. In this specification, the expression "student" is used in an expansive sense to also encompass any person who is training to improve or hone knowledge, skills or aptitude in the operation of the actual vehicle such as, for example, a licensed pilot who is doing periodic training for certification purposes.

In the embodiment depicted by way of example in FIG. 1, a multi-agent computerized simulation system is generally designated by reference numeral 100. The multi-agent computerized simulation system 100 is designed to train a user 102, e.g. a student pilot (hereinafter also referred to as simply the student, trainee, pilot or operator depending on the particular context). In the specific example of FIG. 1, the multi-agent computerized simulation system 100 is a pilot-training system or flight training system for training a student pilot to fly an aircraft. The aircraft can be fixed-wing aircraft or rotary wing aircraft such as a helicopter or eVTOL aircraft. The aircraft can be a conventional, humanly piloted aircraft having an onboard human pilot or it may be an unmanned (or "uncrewed") remotely piloted aircraft system (RPAS) that is remotely piloted from a ground station using a communication link. The system 100 may be used or adapted for use, with suitable modifications, to train students to operate other types of vehicles such as land vehicles, warships, submarines, or spacecraft.

As depicted by way of example in FIG. 1, the multi-agent computerized simulation system 100 includes an interactive computerized simulation station 1100 and a simulation server or simulation server cluster 140 for providing a multi-agent simulation to train the user 102 in how to operate the vehicle. The server cluster 140 may be replaced in whole or in part by a cloud-based computing system for storing simulation data and for running the simulation in the interactive computerized simulation station 1100. The interactive computerized simulation station 1100 has tangible instrumentation, i.e. physical controls such as a control yoke, throttle levers, rudder pedals, etc., that the user can manipulate, move or otherwise physically engage to enable the user to control a simulated vehicle in the multi-agent simulation. The system 100 further includes, in each server or computing device in the server cluster 140, a memory 144 storing all or at least a portion of the simulation data for the multi-agent simulation. The memory 144 may have multiple storage devices, e.g. the memory may be distributed memory or cloud-based memory. The system further includes in each server or computing device of the server cluster 140 a processor 142 communicatively coupled to the memory and configured to execute software code that provides the multi-agent simulation. The processor may be a single processor or multiple processors, which include one or more central processing unit (CPU) and/or graphics processing unit (GPU). Each processor may include one or more processing cores. As such, it will be appreciated that a single computing device or multiple connected computing devices may be used to run the simulation in the simulation station 1100. As further depicted by way of example in FIG. 1, each server 141 in the server cluster 140 may include a data communication port (e.g. network interface) 146 and an input/output (I/O) device 148.

In the embodiment depicted in FIG. 1, the memory 144 stores a user vehicle database 200 that includes a plurality of different user vehicles that the user can load into the simulation for training. Three different user vehicles 201, 202, 203 are shown in FIG. 1 by way of example but a different number of user vehicles may be stored in the database 200. For example, vehicle 1, vehicle 2 and vehicle 3 may be three different types of aircraft. As an example, vehicle 1 may be a Joby S4, vehicle 2 may be a Beta Alia, and vehicle 3 may be a Lilium Jet. Alternatively, vehicle 1, vehicle 2 and vehicle 3 may be three different variants of the same aircraft. Still alternatively, they may be three different configurations of the same variant, e.g. different weight- and-balance configurations, different passenger loads, different propulsion systems, different battery types and capacities, etc.

As depicted by way of example in FIG. 1, the memory of the simulation system also includes a computer-generated forces (CGF) entity database 300 for storing different CGF entities 301, 302, 303. The number of CGF entities may differ from what is shown. The CGF entities may be external simulated vehicles. These are simulated vehicles that are not controlled by the user in the simulation, hence are external to the user's ownship (i.e. vehicle that the user of the simulation is directly controlling). The simulation can load one or more of these CGF entities (i.e. simulated external vehicles) into the simulation. In one implementation, each of these simulated external vehicles has behavior in the simulation that is deterministically scripted (i.e. each CGF is not controlled by an autonomous agent). However, in another implementation, each CGF entity is controlled by its own autonomous agent (autonomous actor) that makes its own observations and decisions using its own AI. The autonomous agents or actors 401, 402, 403 are stored in an agent database (or actor database) 400. A different number of autonomous agents may be stored in the agent database 400. Each of the agents/actors has its own autonomous agent artificial intelligence that is trained to control a simulated external vehicle on its own. The training of the autonomous agent AI may be done using a reinforcement learning technique such as multi-agent reinforcement learning (MARL) or any other equivalent learning technique. Training using multi-agent reinforcement learning (MARL) may be done by tracking a flight safety parameter and by rewarding or penalizing the artificial intelligence based on the flight safety parameter. The flight safety parameter may be intra-aircraft separation distance. It may be any other suitable parameter like battery state or fuel state, bank angle, pitch angle, G-force, rate of descent, etc.

As further depicted in FIG. 1, the agent database 400 may also store a traffic controller as a further agent or actor. The traffic controller may be an air traffic controller in a flight simulation. The traffic controller is controlled by a traffic controller artificial intelligence. In the context of flight simulation, the traffic controller AI is thus an air traffic controller (ATC) artificial intelligence, i.e. referred to herein as an ATC AI. Training of the traffic controller artificial intelligence, in one embodiment, is accomplished using reinforcement learning (RL). In one implementation, this is accomplished by tracking a flight safety parameter and by rewarding or penalizing the traffic controller artificial intelligence based on the flight safety parameter. The flight safety parameter may be intra-aircraft separation distance. The flight safety parameter may be a battery state for an electric aircraft such as an eVTOL aircraft. The flight safety parameter may be a fuel state for an aircraft having a combustion engine like a turboprop or turbofan engine. Another other parameter may be used to train the AI, e.g. G-forces, bank angles, pitch angles, rate of descent, rate of climb, etc.

In the embodiment depicted by way of example in FIG. 1, the agent database 400 also stores a cognitive assistant that assists the user and cooperates with the user in performing various tasks operating the vehicle. In one embodiment, the processor executes code to provides the cognitive assistant for cooperating with the user. The cognitive assistant may partially control the vehicle and may also interact with the simulated traffic controller. In the context of aircraft and flight training, the cognitive assistant is a virtual co-pilot (VCP). If the vehicle is an aircraft, the cognitive assistant is a virtual co-pilot 420. The virtual co-pilot (VCP) is controlled by a virtual co-pilot AI which may be trained using natural language processing (NLP) or any other suitable training technique. The virtual co-pilot (VCP) 420 is an autonomous agent having its own AI that autonomously interacts with the user and with the simulated air traffic controller. Interactions may be verbal. For example, the virtual co-pilot can make its own observations about the aircraft and environment, instrumentation readings, ATC communications, weather, etc. and then make its own decisions. The decisions may be include communicating verbally with the pilot (user), e.g. to request or suggest an action, confirm a status, or to discuss a concern. The VCP 420 may also communicate with the ATC autonomously. The pilot (user) can thus hear the verbal communications between the VCP and the ATC. Likewise, the VCP can respond autonomously to verbal instructions or communications from the ATC. This chatter between ATC and VCP adds a level of realism to the simulation.

Referring still to FIG. 1, it will be appreciated that the ATC 430, VCP 420 and autonomous agents 401, 402, 403 may be stored in different databases or in shared databases. It will also be appreciated that there may be multiple ATC entities and/or multiple virtual co-pilots in the database(s).

In one embodiment, the simulation system 100 loads one or more CGF entities from the CGF database. If the CGF is deterministically scripted, the simulation system loads the deterministically script behaviour into the simulation. If the CGF is not deterministically scripted, and is controlled by an autonomous agent having its own AI, the simulation system assigns control of the one or more CGF entities to respective autonomous agents that act therefore as AI-driven pilots of their respective aircraft. The simulation system loads into the simulation the ATC actor to perform air traffic controller duties and optionally loads a virtual co-pilot to assist the user in flying the simulated aircraft in the simulation. The user trains in the simulation by interacting verbally with the simulated ATC, e.g. by requesting authorizations to take off or to land or to obtain routing. The user also interacts with the ATC if an emergency is declared. In one embodiment, the simulated ATC also interacts with external simulated aircraft in the simulation. All such interactions are verbal. The simulation uses a speech-to-text module and a text-to-speech module to interface between the user and the ATC so that the user can speak out loud to the ATC via the designated (simulated) communication channel and can receive verbal messages from the ATC again via the designated (simulated) communication channel to mimic a real-life interaction with ATC over a radiofrequency communication link.

In one embodiment, the verbal communications between the simulated ATC and the user and autonomous agents of the simulated external aircraft are on a (simulated) common communication channel (same simulated frequency) so that the user can hear chatter between the autonomous agents of the simulated external aircraft and the ATC. In the simulation, optionally, the ATC can have different ATC actors responsible for different aspects of airport or vertiports operations, such as approach/departure control, ground apron control and de-icing operations. In that case, the user selects the appropriate channel frequency to communicate with the ATC approach/departure control, selects a different channel frequency to communicate with ground apron control and selects a different channel frequency to communicate with de-icing operations. In the case of eVTOL, there may be a battery recharging control on a separate channel. In simulation involving large airports or vertiports, there may be multiple channel frequencies for a particular function like approach/departure so not all communications are being carried on the same channel frequency to avoid confusion. Thus, depending on the channel frequency, the user may hear only some verbal communications between the ATC and one or more other simulated external aircraft. If the simulation has loaded a VCP, the VCP may take charge to select appropriate channel frequencies to communicate with the ATC for approach/departure, for ground apron operations, for de-icing operations or battery recharging operations (in the case of eVTOL aircraft). The user can thus hear the VCP communicating verbally with the ATC.

The VCP and ATC are their own autonomous agents in the simulation. In some implementations, the simulation also provides autonomous agents for flying the simulated external aircraft. Since these multiple agents are autonomous, the simulation is referred to herein as a multi-agent simulation. Furthermore, as the agents are autonomous, the simulation is not deterministic because the autonomous agents interact based on their own AI. The ATC interacts with the user during the simulation to coordinate takeoff, landing, routing and optionally other aspects of flight operations. The user interacts verbally with the ATC.

In one embodiment, the processor executes code to provide a virtual instructor in the simulation. The virtual instructor can coach, grade, correct, and critique the operations of the user. In one embodiment, the virtual instructor and virtual co-pilot can be merged into a combined role of virtual instructor/co-pilot. The virtual instructor/co-pilot can be a single AI actor that assists the user in flying the aircraft by performing co-pilot functions while also coaching and/or evaluating the user. The virtual instructor/co-pilot can in one embodiment adapt to the performance of the user by dynamically adjusting the degree of assistance provided to the user in response to detecting the performance of the user.

In the embodiment depicted in FIG. 1, the one or more simulated external vehicles are computer-generated forces (CGF) entities. The CGF entities may be stored in a CGF database for rapid access and use in the simulation. The CGF entities may have deterministically scripted behavior or these may controlled by autonomous agents acting like virtual pilots. In the embodiment shown in FIG. 1, the simulation can mix and match different autonomous agents with different external simulated vehicles (CGF entities). For example, the autonomous agents can be trained to different levels of flying skills or trained to have different personas (more aggressive, more caution, more communicative, less communicative, more individualistic, more cooperative, etc). The simulation can then select to pair a particular agent with a particular CGF entity (external simulated vehicle) to provide different simulation experiences to the user, e.g. to introduce unexpected or unpredictable behaviours or new types of nuanced behaviours from the actors operating the other vehicles. AI agents, whether these are autonomous agents flying other aircraft and/or the ATC, may be trained according to different training techniques and goals to obtain agents with different behaviours. For example, it may be useful to train agents that are specific to particular geographical regions where pilots or ATC may behave differently based on local customs, cultural norms, operating styles, local rules, etc. In another embodiment, a more simplistic implementation combines a CGF entity with an agent to create a combined CGF-agent entity that is stored together.

The foregoing simulation system is particularly useful for training a user to pilot an eVTOL aircraft particularly in a dense operating environment like a vertiport where there are numerous other eVTOL aircraft operating. However, it will be understood that this simulation system can be used, or adapted for use, for training student pilots to fly other types of aircraft, e.g. jet aircraft having turbofans or turbojet engines, propeller aircraft having combustion engines, helicopters, airships, remotely piloted aircraft, drones, unmanned aerial systems, etc. Furthermore, the simulation system may be used or adapted for use to train a user to operate a different type of vehicle such as a land-based vehicle (e.g. car, truck, tank, etc.), a water-based vehicle (ship, boat, submarine, etc.) or a spacecraft. The simulation system may be used, or adapted for use, to train a user in a command and control (military) system in which the traffic controller coordinates movements of various military vehicles, e.g. an AWACS (airborne early warning and control) aircraft for coordinating fighter jets, bombers, aerial refueling aircraft, electronic warfare aircraft, drones, etc. as a coordinated strike force in a military operation. In a military simulation, the air traffic controller (e.g. AWACS) communicates with friendly (allied) aircraft whereas simulated enemy aircraft are CGF entities that are not in communication with the air traffic controller.

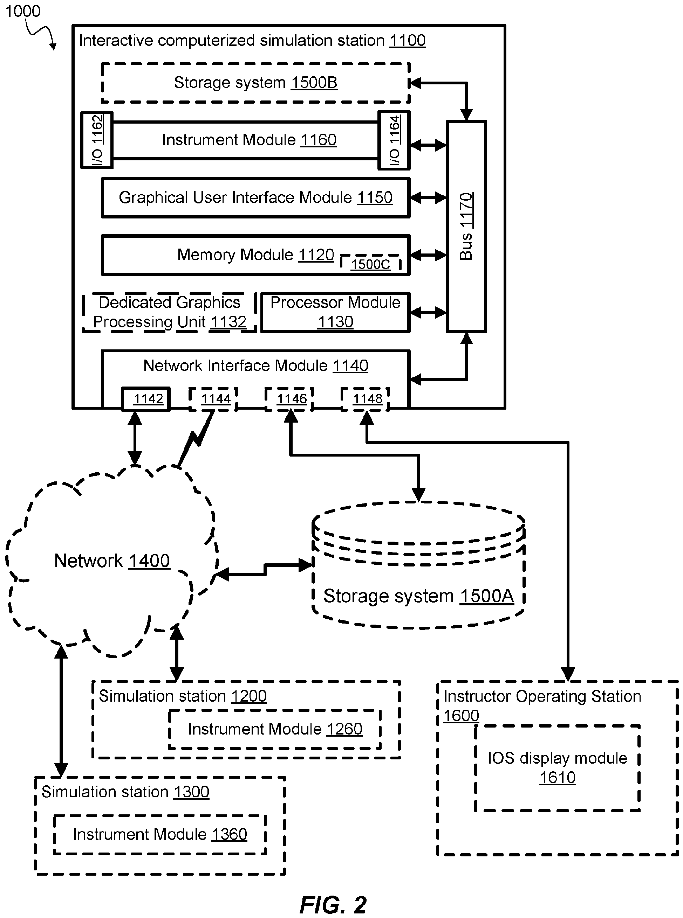

The simulation station 1100 with which the user interacts may be a flight simulator configured with the components shown schematically by way of example in FIG. 2. In the example depicted in FIG. 2, the interactive computerized simulation station 1100 comprises a memory module 1120, a processor module 1130 and a network interface module 1140. The processor module 1130 may represent a single processor with one or more processor cores or an array of processors, each comprising one or more processor cores. In some embodiments, the processor module 1130 may also comprise a dedicated graphics processing unit 1132. The dedicated graphics processing unit 1132 may be required, for instance, when the interactive computer simulation system 1000 performs an immersive simulation (e.g., pilot training-certified flight simulator), which requires extensive image generation capabilities (i.e., quality and throughput) to maintain the level of realism expected of such immersive simulation (e.g., between 5 and 60 images rendered per second or a maximum rendering time ranging between 15ms and 200ms for each rendered image). In some embodiments, each of the simulation stations 1200, 1300 comprises a processor module similar to the processor module 1130 and having a dedicated graphics processing unit similar to the dedicated graphics processing unit 1132. The memory module 1120 may comprise various types of memory (different standardized or kinds of Random-Access Memory (RAM) modules, memory cards, Read-Only Memory (ROM) modules, programmable ROM, etc.). The network interface module 1140 represents at least one physical interface that can be used to communicate with other network nodes. The network interface module 1140 may be made visible to the other modules of the computer system 1000 through one or more logical interfaces. The actual stacks of protocols used by physical network interface(s) and/or logical network interface(s) 1142, 1144, 1146, 1148 of the network interface module 1140 do not affect the teachings of the present invention. The variants of the processor module 1130, memory module 1120 and network interface module 1140 that are usable in the context of the present invention will be readily apparent to persons skilled in the art.

A bus 1170 is depicted as an example of means for exchanging data between the different modules of the computer simulation system 1000. The present invention is not affected by the way the different modules exchange information between them. For instance, the memory module 1120 and the processor module 1130 could be connected by a parallel bus, but could also be connected by a serial connection or involve an intermediate module (not shown) without affecting the teachings of the present invention.

Likewise, even though explicit references to the memory module 1120 and/or the processor module 1130 are not made throughout the description of the various embodiments, persons skilled in the art will readily recognize that such modules are used in conjunction with other modules of the computer simulation system 1000 to perform routine as well as innovative steps related to the present invention.

The interactive computer simulation station 1100 also comprises a Graphical User Interface (GUI) module 1150 comprising one or more display screen(s). The display screens of the GUI module 1150 could be split into one or more flat panels, but could also be a single flat or curved screen visible from an expected user position (not shown) in the interactive computer simulation station 1100. For instance, the GUI module 1150 may comprise one or more mounted projectors for projecting images on a curved refracting screen. The curved refracting screen may be located far enough from the user of the interactive computer program to provide a collimated display. Alternatively, the curved refracting screen may provide a non-collimated display.

The computer simulation system 1000 comprises a storage system 1500A-C that may log dynamic data in relation to the dynamic sub-systems while the interactive computer simulation is performed. FIG. 2 shows examples of the storage system 1500A-C as a distinct database system 1500A, a distinct module 1500B of the interactive computer simulation station 1100 or a sub-module 1500C of the memory module 1120 of the interactive computer simulation station 1100. The storage system 1500A-C may also comprise storage modules (not shown) on the interactive computer simulation stations 1200, 1300. The storage system 1500A-C may be distributed over different systems A, B, C and/or the interactive computer simulations stations 1200, 1300 or may be in a single system. The storage system 1500A-C may comprise one or more logical or physical as well as local or remote hard disk drive (HDD) (or an array thereof). The storage system 1500A-C may further comprise a local or remote database made accessible to the interactive computer simulation station 1100 by a standardized or proprietary interface or via the network interface module 1140. The variants of the storage system 1500A-C usable in the context of the present invention will be readily apparent to persons skilled in the art.

An Instructor Operating Station (IOS) 1600 may be provided for allowing various management tasks to be performed in the interactive computer simulation system 1000. The tasks associated with the IOS 1600 allow for control and/or monitoring of one or more ongoing interactive computer simulations. For instance, the IOS 1600 may be used for allowing an instructor to participate in the interactive computer simulation and possibly additional interactive computer simulation(s). In some embodiments, a distinct instance of the IOS 1600 may be provided as part of each one of the interactive computer simulation stations 1100, 1200, 1300. In other embodiments, a distinct instance of the IOS 1600 may be co-located with each one of the interactive computer simulation stations 1100, 1200, 1300 (e.g., within the same room or simulation enclosure) or remote therefrom (e.g., in different rooms or in different locations). Skilled persons will understand that many instances of the IOS 1600 may be concurrently provided in the computer simulation system 1000. The IOS 1600 may provide a computer simulation management interface, which may be displayed on a dedicated IOS display module 1610 or the GUI module 1150. The IOS 1600 may be physically co-located with one or more of the interactive computer simulation stations 1100, 1200, 1300 or it may be situated at a location remote from the one or more interactive computer simulation stations 1100, 1200, 1300.

The IOS display module 1610 may comprise one or more display screens such as a wired or wireless flat screen, a wired or wireless touch-sensitive display, a tablet computer, a portable computer or a smart phone. When multiple interactive computer simulation stations 1100, 1200, 1300 are present in the interactive computer simulation system 1000, the instance of the IOS 1600 may present different views of the computer program management interface (e.g., to manage different aspects therewith) or they may all present the same view thereof. The computer program management interface may be permanently shown on a first of the screens of the IOS display module 1610 while a second of the screen of the IOS display module 1610 shows a view of the interactive computer simulation being presented by one of the interactive computer simulation stations 1100, 1200, 1300). The computer program management interface may also be triggered on the IOS 1600, e.g., by a touch gesture and/or an event in the interactive computer program (e.g., milestone reached, unexpected action from the user, or action outside of expected parameters, success or failure of a certain mission, etc.). The computer program management interface may provide access to settings of the interactive computer simulation and/or of the computer simulation stations 1100, 1200, 1300. A virtualized IOS (not shown) may also be provided to the user on the IOS display module 1610 (e.g., on a main screen, on a secondary screen or a dedicated screen thereof). In some embodiments, a Brief and Debrief System (BDS) may also be provided. In some embodiments, the BDS is a version of the IOS configured to selectively play back data recorded during a simulation session and an analytics dashboard.

The tangible instrument provided by the instrument modules 1160, 1260 and/or 1360 are closely related to the element being simulated. In the example of the simulated aircraft system, for instance, in relation to an exemplary flight simulator embodiment, the instrument module 1160 may comprise a control yoke and/or side stick, rudder pedals, a throttle, a flap switch, a transponder, a landing gear lever, a parking brake switch, and aircraft instruments (air speed indicator, attitude indicator, altimeter, turn coordinator, vertical speed indicator, heading indicator, etc). Depending on the type of simulation (e.g., level of immersivity), the tangible instruments may be more or less realistic compared to those that would be available in an actual aircraft. For instance, the tangible instruments provided by the instrument module(s) 1160, 1260 and/or 1360 may replicate those found in an actual aircraft cockpit or be sufficiently similar to those found in an actual aircraft cockpit for training purposes. As previously described, the user or trainee can control the virtual representation of the simulated interactive object in the interactive computer simulation by operating the tangible instruments provided by the instrument modules 1160, 1260 and/or 1360. In the context of an immersive simulation being performed in the computer simulation system 1000, the instrument module(s) 1160, 1260 and/or 1360 would typically replicate an instrument panel found in the actual interactive object being simulated. In such an immersive simulation, the dedicated graphics processing unit 1132 would also typically be required. While the present invention is applicable to immersive simulations (e.g., flight simulators certified for commercial pilot training and/or military pilot training), skilled persons will readily recognize and be able to apply its teachings to other types of interactive computer simulations.

In some embodiments, an optional external input/output (I/O) module 1162 and/or an optional internal input/output (I/O) module 1164 may be provided with the instrument module 1160. Skilled people will understand that any of the instrument modules 1160, 1260 and/or 1360 may be provided with one or both of the I/O modules 1162, 1164 such as the ones depicted for the computer simulation station 1100. The external input/output (I/O) module 1162 of the instrument module(s) 1160, 1260 and/or 1360 may connect one or more external tangible instruments (not shown) therethrough. The external I/O module 1162 may be required, for instance, for interfacing the computer simulation station 1100 with one or more tangible instruments identical to an Original Equipment Manufacturer (OEM) part that cannot be integrated into the computer simulation station 1100 and/or the computer simulation station(s) 1200, 1300 (e.g., a tangible instrument exactly as the one that would be found in the interactive object being simulated). The internal input/output (I/O) module 1162 of the instrument module(s) 1160, 1260 and/or 1360 may connect one or more tangible instruments integrated with the instrument module(s) 1160, 1260 and/or 1360. The I/O module 1162 may comprise necessary interface(s) to exchange data, set data or get data from such integrated tangible instruments. The internal I/O module 1162 may be required, for instance, for interfacing the computer simulation station 1100 with one or more integrated tangible instruments that are identical to an Original Equipment Manufacturer (OEM) part that would be found in the interactive object being simulated. The I/O module 1162 may comprise necessary interface(s) to exchange data, set data or get data from such integrated tangible instruments.

The instrument module 1160 may comprise one or more tangible instrumentation components or subassemblies that may be assembled or joined together to provide a particular configuration of instrumentation within the computer simulation station 1100. As can be readily understood, the tangible instruments of the instrument module 1160 are configured to capture input commands in response to being physically operated by the user of the computer simulation station 1100.

The instrument module 1160 may also comprise a mechanical instrument actuator 1166 providing one or more mechanical assemblies for physical moving one or more of the tangible instruments of the instrument module 1160 (e.g., electric motors, mechanical dampeners, gears, levers, etc.). The mechanical instrument actuator 1166 may receive one or more sets of instruments (e.g., from the processor module 1130) for causing one or more of the instruments to move in accordance with a defined input function. The mechanical instrument actuator 1166 of the instrument module 1160 may alternatively, or additionally, be used for providing feedback to the user of the interactive computer simulation through tangible and/or simulated instrument(s) (e.g., touch screens, or replicated elements of an aircraft cockpit or of an operating room). Additional feedback devices may be provided with the computing device 1110 or in the computer system 1000 (e.g., vibration of an instrument, physical movement of a seat of the user and/or physical movement of the whole system, etc.).

The interactive computer simulation station 1100 may also comprise one or more seats (not shown) or other ergonomically designed tools (not shown) to assist the user of the interactive computer simulation in getting into proper position to gain access to some or all of the instrument module 1160.

In the depicted example of FIG. 2, the interactive computer simulation station 1100 shows optional additional interactive computer simulation stations 1200, 1300, which may communicate through the network 1400 with the simulation computing device. The interactive computer simulation stations 1200, 1300 may be associated to the same instance of the interactive computer simulation with a shared computer-generated environment where users of the interactive computer simulation stations 1100, 1200, 1300 may interact with one another in a single simulation. The single simulation may also involve other interactive computer simulation stations (not shown) co-located with the interactive computer simulation stations 1100, 1200, 1300 or remote therefrom. The interactive computer simulation stations 1200, 1300 may also be associated with different instances of the interactive computer simulation, which may further involve other computer simulation stations (not shown) co-located with the interactive computer simulation station 1100 or remote therefrom.

In the context of the depicted embodiments, runtime execution, real-time execution or real-time priority processing execution corresponds to operations executed during the interactive computer simulation that may have an impact on the perceived quality of the interactive computer simulation from a user perspective. An operation performed at runtime, in real time or using real-time priority processing thus typically needs to meet certain performance constraints that may be expressed, for instance, in terms of maximum time, maximum number of frames, and/or maximum number of processing cycles. For instance, in an interactive simulation having a frame rate of 60 frames per second, it is expected that a modification performed within 5 to 10 frames will appear seamless to the user. Skilled persons will readily recognize that real-time processing may not actually be achievable in absolutely all circumstances in which rendering images is required. The real-time priority processing required for the purpose of the disclosed embodiments relates to the perceived quality of service by the user of the interactive computer simulation and does not require absolute real-time processing of all dynamic events, even if the user was to perceive a certain level of deterioration in the quality of the service that would still be considered plausible.

A simulation network (e.g., overlaid on the network 1400) may be used, at runtime (e.g., using real-time priority processing or processing priority that the user perceives as real-time), to exchange information (e.g., event-related simulation information). For instance, movements of a vehicle associated with the computer simulation station 1100 and events related to interactions of a user of the computer simulation station 1100 with the interactive computer-generated environment may be shared through the simulation network. Likewise, simulation-wide events (e.g., related to persistent modifications to the interactive computer-generated environment, lighting conditions, modified simulated weather, etc.) may be shared through the simulation network from a centralized computer system (not shown). In addition, the storage module 1500A-C (e.g., a networked database system) accessible to all components of the computer simulation system 1000 involved in the interactive computer simulation may be used to store data necessary for rendering the interactive computer-generated environment. In some embodiments, the storage module 1500A-C is only updated from the centralized computer system and the computer simulation stations 1200, 1300 only load data therefrom.

The computer simulation system 1000 of FIG. 2 may be used to simulate the operation by a user of a user vehicle. For example, in a flight simulator, the interactive computer simulation system 1000 may be used to simulate the flying of an aircraft by a user acting as the pilot of the simulated aircraft. In a battlefield simulator, the simulator may simulate a user controlling one or more user vehicles such as airplanes, helicopters, warships, tanks, armored personnel carriers, etc. In a naval context, the controller can be a fleet commander on a flagship like an aircraft carrier who is coordinating movements of warships, submarines, naval aviation units, etc.

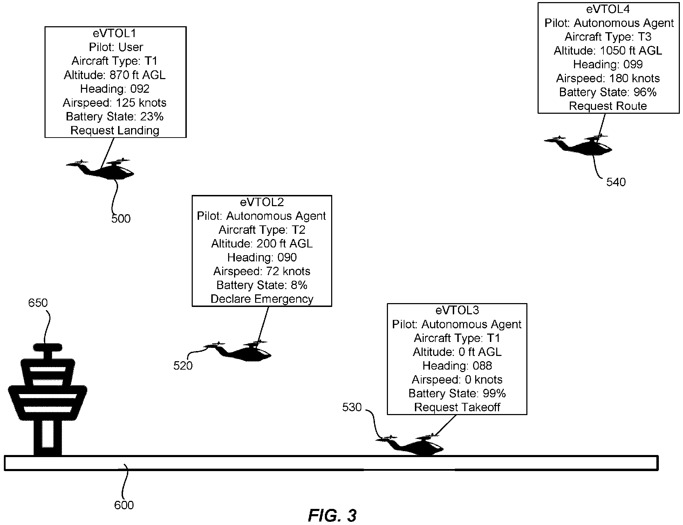

FIG. 3 depicts a simulation of multiple simulated eVTOL aircraft 500, 510, 520, 530 operating at a simulated vertiport 600 having a simulated air traffic controller 650. The human user of the simulation controls a first simulated eVTOL aircraft 500 (i.e. the user's ownship using the simulation station 1100 described above). A second simulated eVTOL aircraft 520 is a simulated external vehicle controlled by an autonomous agent (having its own AI). A third simulated eVTOL aircraft 530 is also a simulated external vehicle controlled by another autonomous agent (having its own AI). A fourth simulated eVTOL aircraft 540 is yet another simulated external vehicle controlled by yet another autonomous agent (having its own AI). The three autonomous agents controlling the simulated external vehicles (second aircraft 520, third aircraft 530, and fourth aircraft 540) may be the autonomous agents 401, 402, 403 stored in the agent database 400 described above and illustrated in FIG. 1. Each of these autonomous agents has an AI that makes observations and decisions based on those observations. For example, the autonomous agent may observe that the aircraft is approaching a waypoint and then makes a decision to turn the aircraft toward the next waypoint. As another example, the autonomous agent may observe a crosswind and then make a decision to execute a corrective adjustment using flight controls (e.g. rudder and/or ailerons) to compensate for the crosswind. As a further example, the autonomous agent may make an observation that another aircraft has gotten too close and then make a decision to radio the ATC and to adjust heading and/or airspeed and/or altitude as an evasive maneuver to avoid getting too close to the other aircraft. In the context of military simulations, the autonomous agents may not only act to fly their respective aircraft but also to engage in aerial combat, airstrike missions, electronic warfare missions, etc. The autonomous agents can be trained to execute simulated military missions by observing simulated targets, e.g. enemy aircraft, surface-to-air missile batteries, ground targets, etc., and then making AI-based decisions about how to engage those targets, e.g. how and when to fire weapons, launch missiles, drop bombs, dispense countermeasures (chaff or flares). The autonomous agent may learn to work with other autonomous agents to coordinate joint missions like airstrikes or aerial combat. In another implementation, as described above, the simulated external vehicles may be a deterministically-scripted CGF entities that are not controlled by autonomous agents.

In the example depicted in FIG. 3, the simulated ATC 650 communicates autonomously with each of the simulated eVTOL aircraft 500, 520, 530, 540 to coordinate respective movements of the simulated eVTOL aircraft at and around the simulated vertiport 600. For example, the simulated ATC 650 grants authorizations to take off, to land, and to assign routes for approaches and departures. The simulated ATC 650 also handles emergencies declared by any of the virtual pilots of the eVTOL aircraft or by the user of the ownship. Optionally, as shown in FIG. 3, the simulation tracks various data for each eVTOL aircraft which can be displayed or presented to the user during a freeze of the simulation or a post-simulation debriefing, or which may be used by an instructor in the instructor operating station (IOS) to monitor or grade performance of the user (student) during the simulation. For example, the simulation can optionally track (and optionally display or present) data such as pilot type (human vs autonomous agent), aircraft type, position, altitude, heading, airspeed, battery state and last communication to ATC. For example, eVTOL1 is being piloted by the human user is a type T1 aircraft flying at an altitude of 870 feet above ground level (AGL) on a heading of 092 at an airspeed of 125 knots. The battery state of eVTOL1 is 23%. The user has communicated with the ATC to request authorization for landing. Similar data is presented in FIG. 3 for eVTOL2, eVTOL3 and eVTOL 4. Other data may be tracked and presented. This data enables the user or the instructor to freeze the simulation to show the user a snapshot of the situation or to later debrief to show a particular situation to the user. Optionally, the virtual instructor can identify operating exceedances, poorly executed maneuvers or decisions, or failures to heed ATC warnings, and then identify a frame (snapshot) of the simulation that illustrates the failure or exceedance to present to the user to show the situation to the user. This may be done after the simulation or during the simulation (by freezing the simulation). Optionally, the simulation can show what the user should have done by showing the correct or recommended movement or action in the simulation.

In a further embodiment, there may be ground vehicles operating on the tarmac of the vertiport such as, for example, maintenance vehicles, de-icing vehicles, snow plows, baggage-transporting vehicles, battery-recharging vehicles, passenger-carrying vehicles (e.g. apron buses), firetrucks, self-propelled platform stairs, pushback tugs, tractors towing baggage carts, catering trucks, etc. In the simulation, the ground vehicles may be have deterministically scripted behavior or these may be controlled by AI-driven autonomous agents. In this further embodiment, the simulation may assign autonomous agents to each of these vehicles to make these ground vehicles act in the simulation. The ATC can interact with these ground vehicles, whether deterministically scripted entities or autonomous agents. The user of the simulation may interact with these vehicles too, either indirectly via the ATC, or directly with the vehicles themselves. In a further embodiment, the simulation may have simulated ground crew on the tarmac, e.g. baggage handlers, mechanics, refueling crew, etc. These simulated ground crew may be simulated using autonomous agents or deterministically scripted.

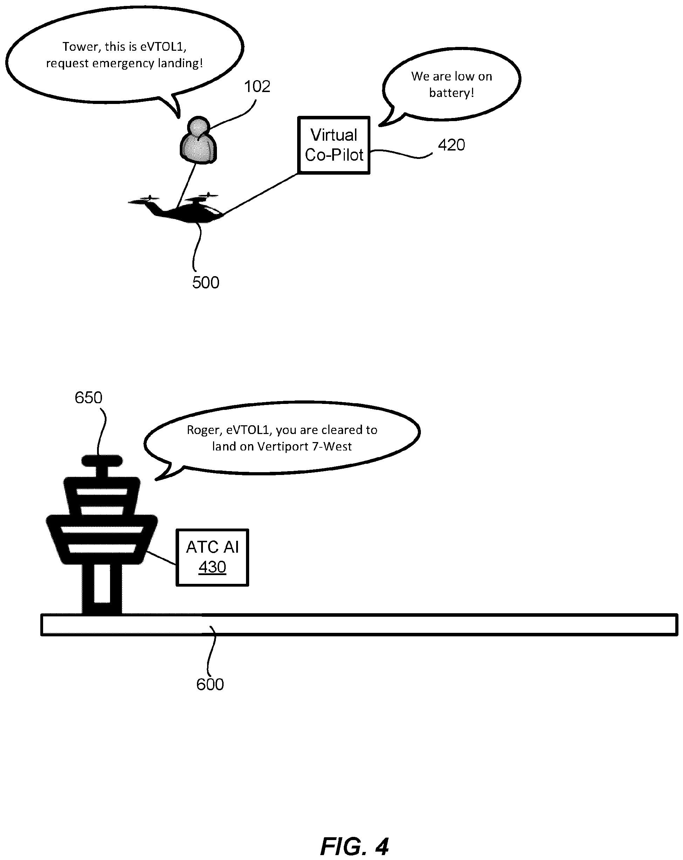

FIG. 4 depicts an example in which a virtual co-pilot 420 verbally warns the user 102 who is piloting the simulated eVTOL aircraft 500 that the battery of the eVTOL aircraft 500 is dangerously low. The user 102 reacts in the simulation by verbally contacting the simulated ATC 650 to request an emergency landing at the simulated vertiports 600. The ATC AI 430 of the simulated ATC 650 receives the speech, converts the speech to text, processes the text to understand what the user is requesting, determines the best course of action by observing the vertiports and eVTOL aircraft nearby and then makes its own decision to authorize a landing at an available landing zone of the vertiports. The ATC AI formulates a reply to authorize the landing and communicates this verbally to the user by converting the text to speech and then playing the speech to the user in the simulation. The user can verbally acknowledge the ATC's authorization and then proceed to maneuver the eVTOL aircraft into a suitable approach to land at the designated landing zone of the vertiport. Similarly, the traffic controller artificial intelligence of the simulated traffic controller is able to receive an emergency request not only from the user but also from a deterministically-scripted CGF entity or autonomous agent of the one or more simulated vehicles. In that case, the traffic controller communicates verbally with the user in order to coordinate a repositioning of the simulated vehicle of the user in response to the emergency request from the user. In other words, if one of the simulated external vehicles declares an emergency, the ATC coordinates an emergency landing for that external vehicle and then advises the user verbally to reposition to make way for the external vehicle in distress.

Further implementation details for the AI-driven cognitive assistant and AI-driven traffic controller are presented below.

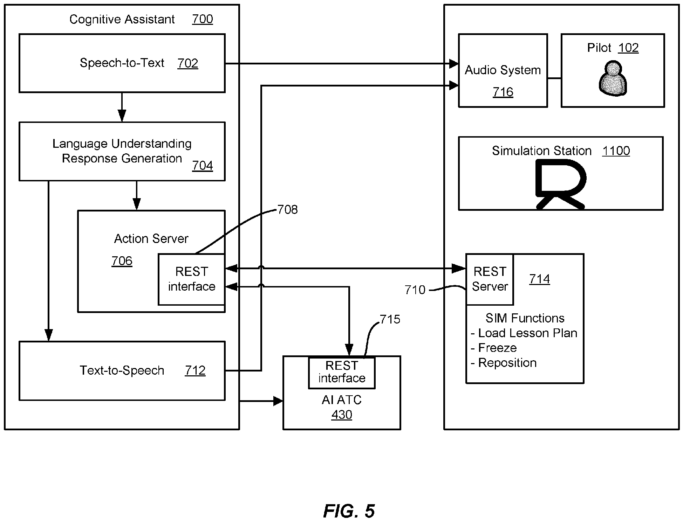

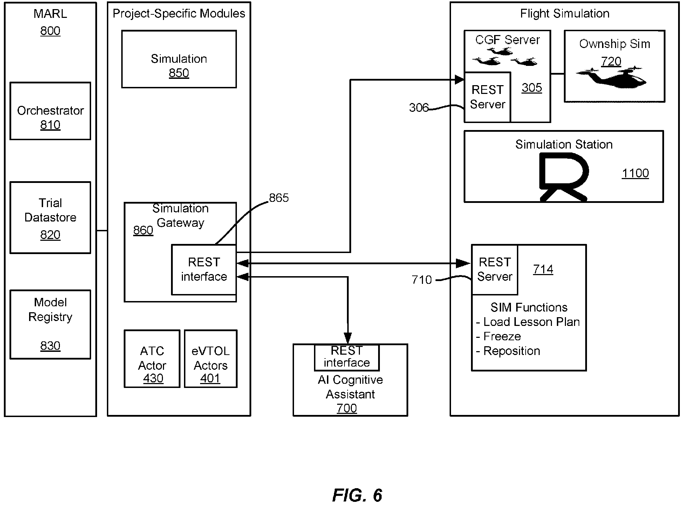

FIG. 5 depicts a high-level architecture of a cognitive assistant (or cognitive agent) 700 in accordance with an embodiment of the present invention. The cognitive assistant powered by AI is parametrized to support conversation that can help a user 102 (i.e. a student pilot) training on an eVTOL aircraft simulator via the simulation station 1100, as shown in FIG. 5. The ATC scenario is deployed in a synthetic environment. In one embodiment, the Open Geospatial Consortium common database (OGC CDB) interacts with Computer Generated Forces (CGF) systems that can interface with integrated, human-in-the-loop (HITL) simulators interoperable with different open standard high-level architecture communication protocols in federated exercises between multiple entities. Collaborative multi-agent reinforcement learning, interacting with a simulation gateway to the simulation, executes AI Air Traffic Controller traffic routing during eVTOL emergency landing scenarios with intelligent agent dialogue. FIGS. 5 and 6 illustrate the main components of these systems and their interconnections with each other and with the simulation services, using a mix of proprietary and industry-standard interchange protocols. As depicted by way of example in FIG. 5, the Cognitive Assistant 700 includes a speech-to-text module 702, a language understanding response generation module 704, an action server 706 having a representational state transfer (REST) interface 708 for communicating with (i) a REST server 710 integrated with a simulator functionality module 714 of the simulation system and (ii) a REST interface 715 of an AI ATC 430. The Cognitive Assistant 700 further includes a text-to-speech module 712. The user 102 (pilot) communicates verbally via an audio system 716 with the speech-to-text and text-to-speech modules 702, 712.

The Cognitive Agent 700 (Cognitive Assistant) serves as a front end to the user 102 (i.e. student), as the entity with which the student can converse and utter requests or ask questions and receive answers. In practice, the Cognitive Agent's capabilities can be attributed to one of three distinct roles: Virtual Instructor, Virtual Co-pilot and Simulated Air Traffic Controller. For each role, a dedicated logic module uses various levels of sophistication, from expert systems to carefully orchestrated AI models, to interface with the front-end layer that supplies the voices. All is coordinated to provide the student a cohesive conversation experience. While each role serves a purpose, it made sense in at least one embodiment of the invention to combine the roles of Virtual Instructor and Virtual Co-pilot into a single persona with a given voice, i.e. a first voice which may be identified by a call sign e.g. Cassie. The Simulated Air Traffic Controller, a role located at a virtual fixed location outside the aircraft, was assigned a persona and second voice (different from the first voice) with a call sign e.g. Bob. Alternatively, the ATC can be given a call sign "Tower". The creation of these two distinct personas/voices helps the user distinguish with whom they are interacting during the simulation.

In the role of Virtual Instructor, the Cognitive Agent takes on tasks an instructor would typically perform, which can be further split into two roles: Virtual Coach and Flight Training Assistant. The Virtual Coach supplies expert guidance and insight to the student, including providing live feedback and session briefing/debriefing. The Flight Training Assistant can interact with the simulator itself to control the training session by interfacing with the remote IOS to: (i) load lesson plans; (ii) toggle the simulation freeze; (iii) reposition the simulator to a requested location or other such tasks.

In the role of Virtual Co-pilot, the Cognitive Agent provides various co-pilot functions autonomously. As a stepping-stone between two-pilot and single-pilot operation, the Cognitive Agent has the ability to act as a Virtual Co-pilot. This role interfaces directly with the aircraft system to further automate cockpit operations and reduce the load on the pilot. Capabilities are diverse and can include: (i) operating aircraft functions (control the landing gear, air conditioning, lights, etc.), (ii) running through checklists, (iii) monitoring flight operations, (iv) assisting with navigation, (v) communicating with the ATC on behalf of the pilot, or other such tasks.

FIG. 6 depicts a high-level architecture of a simulated air traffic controller in accordance with an embodiment of the present invention. In the embodiment depicted by FIG. 6, the Cognitive Agent is acting as the ATC. In other words, the Cognitive Assistant has taken on the project-specific role of ATC. This may be done by loading a project-specific module from a plurality of project-specific modules that provides the ATC functionalities. In the role of Simulated Air Traffic Controller, the Cognitive Agent also provides the voice of the Simulated Air Traffic Controller, and the conversation system actually supports discussion between the Virtual Assistant and Simulated Air Traffic Controller personas. ATC role capabilities focus on managing traffic within a simulated area in complex scenarios, and may includes: (i) monitoring air traffic, (ii) dispatching and rerouting aircraft, (iii) managing emergency situations, (iv) communicating with the student and with the other simulated pilots for realistic radio chatter. In the embodiment of FIG. 6, the flight simulation includes a CGF server 305 having a REST server 306, an ownship simulator 720 run by the simulation station 1100. The flight simulation has a simulation functionality module 714 and a REST server 710 for interacting with simulation gateway 860 of a simulation module 850. The ATC actor 430 and eVTOL actors 401, 402, 403 are loaded into the simulation 850. The simulation gateway uses the REST interface 865 to communicate with an AI Cognitive Assistant 700, the CGF server 305 and the simulation functionality module 714. The MARL module 800 trains the AI in each of the ATC actor and eVTOL actors using an orchestrator 810, a trial datastore 820 and a model registry 830. In one implementation, one or more computers, servers, or computing devices of the simulation system include one or more processors configured to perform iteratively and in real-time the steps, acts or operations of inputting (e.g. automatically inputting) situational data into the machine learning model of the AI of the ATC to generate simulated traffic control instructions and providing the simulated traffic control instructions to the station for communication to the pilot. The situational data comprises, in one embodiment, a state of the simulation model and a pilot communication (or segments of communications) recorded by the station while the pilot operates the station. The state of the simulation model may be characterized at least in part by the kinematics of the simulated vehicle e.g. position, velocity, acceleration, pitch, roll, yaw, thrust, control surface deflections, etc. as well as the control inputs provided by the user via the tangible instrumentation of the station, e.g. throttle setting, yoke position, etc.

There are two artificial intelligence (AI) or machine learning (ML) components in the eVTOL cognitive agent application: an AI speech service module and a Natural Language Processing module. The AI Speech service module provides cloud-based, ready-to-use speech-to-text and text-to-speech capabilities where minimum model fine-tuning is required. The speech-to-text capability enables real-time transcription of audio streams into text. The baseline speech-to-text model can be pre-trained with language data, which can identify generic, day-to-day language. The speech-to-text model is built upon this baseline model with enhancements for ATC special terms and phrases. The text-to-speech capability converts text into humanlike, synthesized speech. The baseline text-to-speech model can be used, and there is no model customization required. A central component of the eVTOL Cognitive Assistant application is the Natural Language Processing (NLP) capability. An AI platform provides building blocks to create the virtual assistant, with modules performing the NLU and connecting to other services, such as the simulation services presented by the architecture of FIG. 6. The NLU processing can be customized via training data in the form of text files that define intents and stories. A chatbot can be used to recognize an intent from commands and questions. Stories are used to define the possible flow of a conversation and the applicability of the intents at any given moment. Multiple versions of utterances are supplied for each intent, with the possibility to include parameters that will be isolated. For instance, both "reposition to ten thousand feet" and "please repos to ten k" will be classified as a "reposition" intent with a parameter of "10,000 ft" for use in the subsequent logic. Thus, each message incoming, as text, is processed by a sequence of components. It is analyzed in the context of the stories and mapped to a valid intent, if any. Additional custom modules handle the appropriate response and/or interactions with other services. In the case of a request to reposition, the system may reply with an acknowledgement, followed by a signal to request the simulation to perform the reposition then an additional vocal notification when the process is completed.

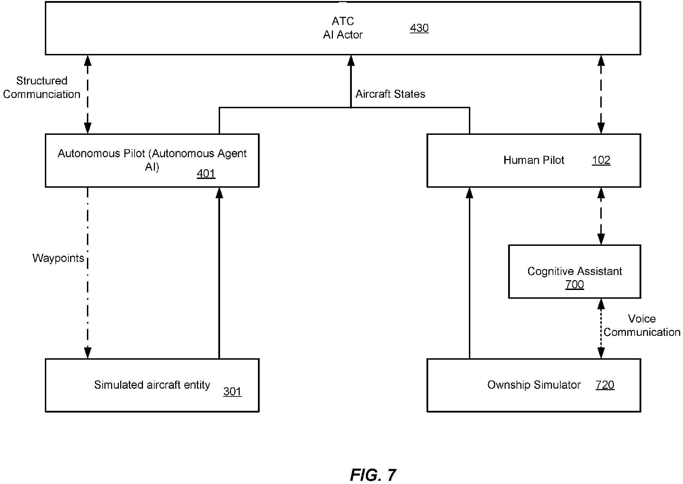

FIG. 7 depicts a collaborative multi-agent reinforcement learning model comprising an ATC AI actor 430, autonomous pilots as autonomous agents 401 controlling simulated eVTOL entities 301. A human pilot (user 102) interacts with the ATC AI actor 430 and cognitive assistant 700 while controlling his or her own eVTOL entity via an ownship simulator 720. A simulated aircraft entity (i.e. an external simulated vehicle) 301 is controlled by an autonomous agent 401 acting as an AI-driven autonomous pilot. Communication is represented in FIG. 7 with dashed lines for structured message communication, solid lines for airspace states, dotted lines for voice communication and a dashed-dotted line for waypoints.

The target domain and use case is modelled as a multi-agent system (MAS), as shown in FIG. 7. Two types of agents were identified. Agents of the first type are Air Traffic Controllers, in charge of analyzing the airspace, and communicating with the eVTOL to dispatch commands, issue altitude clearances, and identify heading and routing patterns. This agent is also in charge of helping maintain aircraft separation. Agents of the second type are eVTOL pilots handling communication with the Air Traffic Controller and steering their eVTOL to follow a flight plan. Two versions of the eVTOL pilots were developed: autonomous and "piloted." The autonomous pilot manages the structured communication with the Air Traffic Controller and updates local waypoints to be followed by the simulated eVTOL entities. The "piloted" version replicates the human pilot in ownship and relies on the Cognitive Assistant to act as the translation interface in the structured communication with the Air Traffic Controller and the voice communication with the Virtual Co-pilot. The target simulation presents a scenario with airport and urban vertiport environment interactions. In one example scenario, during an airport to urban vertiport route, a malfunction forces the pilot to interact with Air Traffic Controller for an emergency landing at the vertiport. Aerial traffic reacts to the ownship and commands dispatched by the ATC dispatches. The agents behave in a non-deterministic, scenario-style fashion.

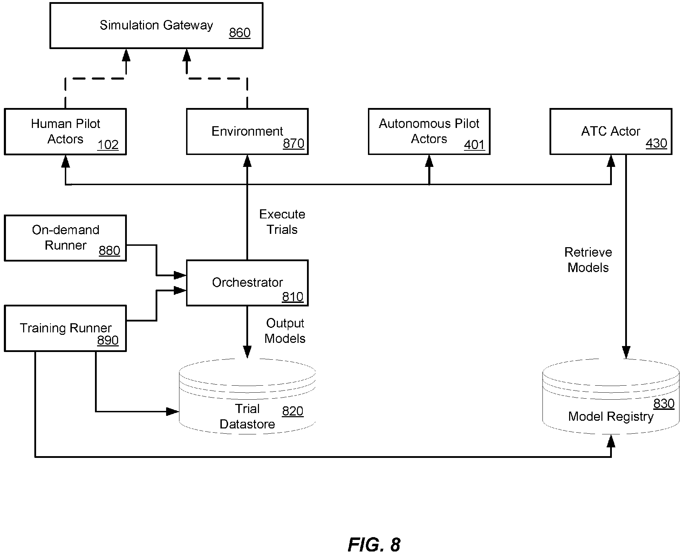

FIG. 8 depicts components of an AI-driven micro-service architecture for one implementation of an AI platform for running a multi-agent simulation. A micro-service architecture is a service-oriented architecture in which an application is arranged as a collection of interconnected services communicating through lightweight protocols. In the particular implementation of FIG. 8, the AI platform has components that include an orchestrator 810, trial datastore 820 and model registry 830. The orchestrator is responsible for the execution of trials over actors and environments. The trial datastore 820 listens for the data generated by the trial, e.g., the trajectories of the aircraft of the different actors operating in the simulated environments. As shown in FIG. 8, the different actors include human pilot actors 102 and autonomous pilot actors. In addition, the simulation includes the ATC actor as described above that interacts verbally with the human pilot actors 102 and autonomous pilot actors. The trial datastore 820 stores the data by each trial and makes this data available for AI training or other purposes online or offline. The model registry 830 hosts trained models and makes them available to the actors. AI platform software development kits (SDKs) may be provided. These SDKs include the actors in charge of taking action from received observations; the environment (from environment module 870) that applies the actions and generates situational observations; and the runners 880, 890, which execute on-demand trials for interactive operations of the platform (i.e., a pilot playing a scenario) and batch queries to train AI models. The runners may include on-demand runner 880 and training runner 890. Those components may communicate with the AI platform components using remote procedure calls (RPC). A simulation gateway 860 may include or interact with a set of HTTP servers able to control the simulation, the Computer Generated Forces and the Cognitive Assistant. The AI platform relies on the formalism of actor classes derived from Markov Decision Processes. Each class is defined by observation and action spaces (i.e., what it perceives of the environment and what actions it can perform in the environment). Agent modelling is mapped into two actor classes: The first class include aircraft pilot actors 401 representing the decision-making of external eVTOL aircraft. Their observation space includes other eVTOL aircraft in their perception range and messages sent to them by the Air Traffic Controller. Their action space includes local waypoints and communication with ATC (in particular, flight plan updates). The second class includes Air Traffic Controller actors 430 represents ATC decision-making. Their observation space includes the state of the airspace they are responsible for and communication with aircraft. Their action space includes communicating with the aircraft. Class defines what each actor can do; implementation defines how the actor performs the action. The AI platform enables multiple implementations of each actor to coexist transparently. For the aircraft pilot actors, two implementations are provided. In a first implementation, the ownship, which is operated interactively by a human trainee or user 102, does not generate waypoints, as the human trainee or user 102 already has control over the aircraft. In a second implementation, the aircraft pilot actors have a doctrine-based scripted behavior.

In another embodiment the aircraft pilot actors may be trained, e.g. using Deep Reinforcement Learning (DRL), to act an autonomous agents. However, it is not necessary for some simulations to implement DRL-trained pilot actors because sufficient perceived diversity, realism and reactivity can be achieved by only DRL-training the Air Traffic Controller. For the Air Traffic Controller actor 430, a hybrid approach leverages a RL-trained agent, observation preprocessing and heuristic implementation of high-level tasks. This approach is shown in FIG. 8. The first part of the actor implementation addresses reception of inbound messages from the eVTOLs and the update of the airspace to the latest known state of each eVTOL, including: (i) current location; (ii) final destination; (iii) current route, (iv) latest takeoff, landing or routing request; (v) incident declaration.

This list of eVTOL states was used as an observation for the RL-trained agent. The output action space includes a combination of identifying the eVTOL and the task to be performed: "Handle Incident," "Handle Routing," "Authorize Takeoff," "Authorize Landing" or "No Action." A downstream process was then applied. "Handle Incident" assigns the nearest vertiport for an emergency landing to the eVTOL and updates the final destination of the other eVTOLs navigating toward the same vertiport. The "Handle Routing" process computes a new route toward the final destination. Other processes were simply about sending the right message to the eVTOL pilot actor.

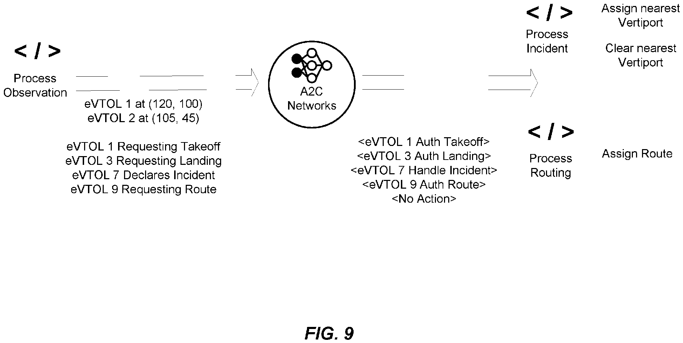

This architecture makes the role of the RL agent about prioritizing which action to take, while leaving the execution of the action to a heuristic process. Our RL agent training uses, in one embodiment, the Advantage Actor Critic (A2C) algorithm which is selected for its simplicity and stability. The A2C algorithm combines the advantages of both policy-based and value-based methods. As depicted in FIG. 9, in an A2C implementation, an actor network learns to choose actions based on observed states, while a critic network estimates the expected rewards or values of those states. The actor receives feedback from the critic in the form of advantages, which indicate how much better or worse the chosen action was compared to the expected value. This feedback helps the actor update policy, while the critic network updates value estimates based on the temporal difference error between predicted and actual rewards. By iteratively improving both the policy and value estimates, A2C enables more stable and efficient learning in RL tasks. FIG. 9 depicts an internal architecture of an AI-driven air traffic controller leveraging Advantage Actor Critic (A2C) for one implementation. The observed states may include in this example eVTOL positions, altitudes, headings, airspeeds, etc. The observed states may also include eVTOL requests/communications, e.g. a request for authorization to takeoff or to land, an incident declaration, a request for a route. The A2C learns to select an appropriate actions based on observed states. For example in response to a declared incident, the A2C may process in the incident by assigning the eVTOL to a nearest vertiport and clearing the nearest vertiport of any potentially conflicting air traffic. As another example, in response to receiving a request for a route, the A2C may process the routing request to assign a route to the eVTOL that has requested the route. The critic network then assesses the outcome, assigns a reward (or a penalty) and then uses this feedback to iteratively teach the A2C to make increasingly better decisions based on those observed states.

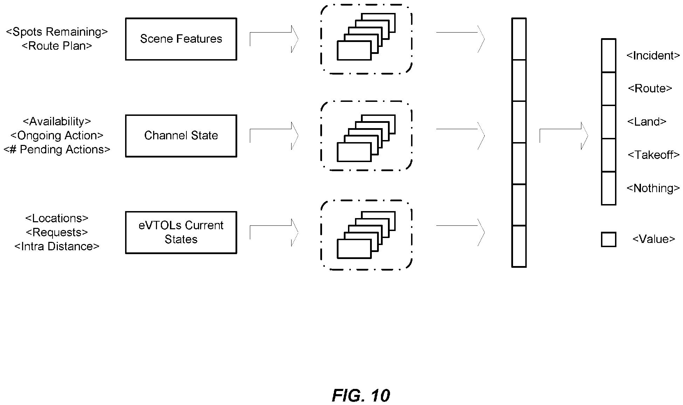

FIG. 10 depicts an air traffic controller A2C network architecture for one implementation. As shown by way of example in FIG. 10, the A2C network is divided into three smaller units (networks) designated as Scene Features, Channel State and EVTOLs Current State. The first network (denoted Scene Features) processes features from the scene, such as the number of parking spots left in each vertiport, eVTOL routes, etc. The second network (denoted Channel State) deals with the state of the communication channel, whereas the third network (denoted EVTOLs Current State) processes the eVTOLs locations, requests, intra-eVTOL distances among some other eVTOL states.

The overarching A2C network concatenates the processed vectors from each of the individual networks to be mapped to the action space. This network architecture is dependent on the number of considered eVTOLs, destination vertiports and route waypoints. However, these numbers should be considered as upper bound, as the agent is usable with fewer eVTOLs, vertiports or waypoints by zeroing the matching input values and ignoring the matching output values.

It is important to note that neither the network nor the pre- and post-process design or configuration consider the flight dynamics of specific aircraft or the environment. The only assumption is that all the aircraft types are equivalent, as the actor does not have any way of telling them apart. The Air Traffic Controller actor was trained by running a campaign of AI trials as a "Training Runner". Each trial was configured with a randomized list of eVTOL having randomized destinations, with the trial ending when all eVTOLs reached their respective destinations. The reward function was designed to heavily penalize collision and separation break (intra-eVTOL distance) to encourage the safety of the eVTOL flights. Trial length also carried a penalty to encourage the Air Traffic Controller to help eVTOLs reach their destination and thus end the trial as quickly as possible. The table below presents a simple example of some eVTOL events and, for each event, a respective reward/penalty. It will be appreciated that the events and their respective rewards/penalties are merely illustrative. Other events may be used. Other rewards/penalties may be used.

| **Events** | **Reward/Penalty** |
|---|---|
| Collision between eVTOLs | -2 |
| Intra-eVTOL Distance <= 50 m | -1 |
| Every Step | -0.05 |

In one implementation, European Union Aviation Safety Agency (EASA) AI Guidelines are used to provide a framework to ensure the technologies are reliable and trustworthy. The Virtual Instructor, Virtual Co-pilot and Simulated Air Traffic Controller were designed with safety in mind, the objective being to facilitate self-paced training to achieve the goals of training pilots faster and better than before. This goal is accomplished by leveraging AI/ML technologies and the EASA AI guidelines to provide a framework that ensures the technologies themselves are reliable and trustworthy. As such, many of these guidelines have been incorporated in the development pipeline of the solution. Examples include: (i) identifying the level of the AI application, its capabilities and its users; (ii) ensuring that procedures avoid causing bias in the trained models; (iii) assessing the risk of de-skilling the users and mitigating it appropriately; (iv) ensuring the correct data is collected, managed, processed, labeled, and used to train models; (v) documenting the solution; and (vi) ensuring appropriate configuration management of the solution.

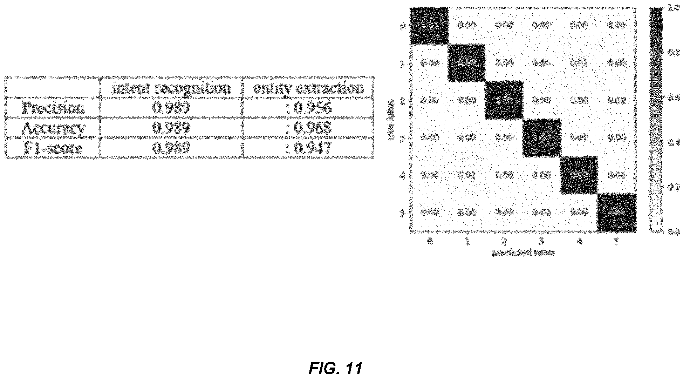

Model training results were logged and recorded in a DevOps pipeline. The NLU component is evaluated using cross-validation. Cross-validation automatically creates multiple train/test splits and averages evaluation results on each train/test split. Intent recognition performance metrics and confusion matrix is shown in FIG. 11. Precision, accuracy and F1 scores are presented for intent recognition and entity extraction.

Experiments were conducted to evaluate the realism of the resulting air traffic behavior both qualitatively, in the real-time simulation environment, and quantitatively using domain metrics. The Air Traffic Controller was benchmarked against a greedy heuristic policy (first request-first service) baseline on a few scenarios with the number of eVTOLs, vertiports and waypoints varying between 1 and 10. There was an observed increase in the AI Air Traffic Controller's expected total rewards +/- 3 standard deviations with gains achieved through repeated experience across scenarios.

The trained AI Air Traffic Controller's policy turns out to be a safer ride as compared to that of the heuristic counterpart. The number of collisions in a scenario directed by the AI Air Traffic Controller remains practically non-existent, with a drastic fall in the number of close encounters between eVTOLs (i.e., intra-eVTOL distance) as well. In comparison to the Heuristic Air Traffic Controller, the safety outcomes are considerably better.

Since the trained AI Air Traffic Controller agent learns to maximize safety, proximity between eVTOLs is considerably greater during trials as compared to the eVTOLs directed by the Heuristic Air Traffic Controller. However, this causes the eVTOLs to take longer to complete their trips. These results show that the AI Air Traffic Controller was able to consider the safety objectives expressed as part of the reward function while fulfilling the assigned mission. Qualitatively, it was observed that the main difference between the greedy heuristic behavior and the trained one is that the latter tends to delay takeoff requests. This means the AI Air Traffic Controller was able to learn to anticipate conditions causing close encounters, in particular the traffic density around vertiports, and adapt behavior accordingly. The behavior of this multi-agent system was implemented using a hybrid approach that combined carefully crafted, but ultimately simple, heuristic processes involving the eVTOL pilot actors and the pre- and post-processing of the AI Air Traffic Controller actor. Conversely, deep reinforcement learning (DRL) was limited to task priority. It was demonstrated that, by encoding safety rules in the reward function, one could obtain high-fidelity behavior. Other desirable aspects could be considered by combining relevant metrics with the reward function. Furthermore, this approach is adaptable to new scenarios and, more importantly in the early day of the eVTOL industry, new aircraft dynamics through the retraining of the policy.

Since the W-model (EASA, 2023b) of learning quality assurance allows traceability both in the engineering and training phases, this provides an ability to analyze the human factors involved in the user's (student pilot's) learning process with a higher level of trust in a human-machine-teaming context. The resulting framework offers a greater ability to analyze immersive and conversational person-machine interfaces in the operation of eVTOL in an urban environment.

The objective of advanced air mobility (AAM) activity is to transport passengers efficiently and safely in an urban environment, offering new challenges to pilots and traffic management systems. The embodiments of the invention disclosed provide a feasible, operable AAM transport system for autonomous or semi-autonomous vehicles using AI. Mixed-reality (MR) flight training devices with artificial intelligence capability provide high-fidelity simulations to train student pilots with the appropriate level of immersion and realism of a complex scene involving air traffic management operations in a synthetic urban environment. This new technology can be leveraged to ramp up pilot qualification to meet demand, contributing a low carbon footprint and improving training cost efficiency.

Although the foregoing description of embodiments refers to eVTOL aircraft, it will be appreciated that this simulation technology may be used for any other type of aircraft. More generally, this simulation technology may be used or adapted for use with other types of vehicle including land vehicles, boats, or spacecraft. In one implementation, there may be mix of different types of aircraft operating in the simulation in proximity to the user's ownship, e.g. one aircraft may be a simulated remotely piloted aircraft, one may be a simulated autonomously flying drone, and one may be a simulated external aircraft piloted by an autonomous agent having an AI trained as described above. In a variant, the simulated external aircraft may be piloted by two autonomous agents, cooperating autonomously to fly the aircraft like pilot and co-pilot.

Although specific communication protocols and AI techniques are described above, such as REST, A2C, etc., it will be appreciated that other equivalent protocols and techniques may be used to achieve the same or substantially similar results.

Although the primary application of the foregoing technology is for running training simulations, it will be appreciated that the AI-driven ATC may be in theory deployed, once suitably trained and tested, into a real-world air traffic controller to control air traffic for real aircraft. Similarly, the AI-driven autonomous agents may be deployed into real aircraft such as unmanned aircraft, drones or the like to pilot real-world aircraft. More generally, for other types of vehicles, the AI-driven autonomous agents may be deployed to drive or control other types of real-world vehicles once they have been suitably trained in the simulation.

The foregoing enable various new methods of providing simulation training to a user such as for example providing flight simulation training. In one particular application, the flight simulation training is eVTOL training. One such method entails providing a multi-agent simulation to the user via an interactive computerized simulation station having tangible instrumentation enabling the user to control a simulated vehicle. The user interacts with the simulation by physically moving tangible instruments in the simulation station to cause the simulated vehicle to react in the simulation. The method entails providing a simulated traffic controller having a traffic controller artificial intelligence (ATC) AI) for interacting verbally with the user via the multi-agent simulation to coordinate movement of the simulated vehicle. The method may entail providing one or more simulated external vehicles, such as CGF entities, whose movement in the simulation is scripted deterministically.

In another embodiment, the method entails providing one or more simulated external vehicles that simulate one or more external vehicles, each simulated external vehicle being operated by an autonomous agent having an autonomous agent artificial intelligence for controlling the simulated external vehicle whose movement in the multi-agent simulation is determined by observations and decisions made by the autonomous agent artificial intelligence and by reacting to one or more verbal instructions received by the simulated traffic controller.

In another embodiment, the method entails providing a simulated traffic controller for interacting verbally with the user in the simulation and providing a traffic controller artificial intelligence for the simulated traffic controller to coordinate movement of the simulated vehicle with the user while the user uses tangible instrumentation in an interactive computerized simulation station. In this method, the user communicates verbally with the simulated traffic controller by speaking to a speech-to-text module that cooperates with a natural language processing module to recognize and understand what the user is saying to the traffic controller. The traffic controller formulates and sends a reply using a text-to-speech module to audibly communicate with the user. This simulation method provides a highly realistic simulation environment for the user.

In another embodiment of this method, the traffic controller artificial intelligence further interacts with one or more autonomous agents of one or more simulated external vehicles that simulate one or more external vehicles, each autonomous agent having an autonomous agent artificial intelligence for controlling a respective simulated external vehicle whose movement in the multi-agent simulation is determined by observations and decisions made by the autonomous agent artificial intelligence and by reacting to one or more verbal instructions received by the simulated traffic controller.

In another embodiment, the method entails implementing a virtual co-pilot artificial intelligence for making observations and decisions independently of the user controlling the simulated vehicle, interacting verbally with the user via the simulation while the user is controlling the simulated vehicle using tangible instrumentation in an interactive computerized simulation station and interacting verbally with a simulated traffic controller in order to coordinate movement of the simulated vehicle by the user. In this method, the virtual co-pilot (VCP) also interacts verbally with the user using speech-to-text and text to-speech modules as well as natural language processing.

These methods can be implemented in hardware, software, firmware or as any suitable combination thereof. That is, if implemented as software, the computer-readable medium comprises instructions in code which when loaded into memory and executed on a processor of a computing device causes the computing device to perform any of the foregoing method steps. These method steps may be implemented as software, i.e. as coded instructions stored on a computer readable medium which performs the foregoing steps when the computer readable medium is loaded into memory and executed by the microprocessor of the computing device. A computer readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc. For the purposes of this specification, the expression "module" is used expansively to mean any software, hardware, firmware, or combination thereof that performs a particular task, operation, function or a plurality of related tasks, operations or functions. When used in the context of software, the module may be a complete (standalone) piece of software, a software component, or a part of software having one or more routines or a subset of code that performs a discrete task, operation or function or a plurality or related tasks, operations or functions. Software modules have program code (machine-readable code) that may be stored in one or more memories on one or more discrete computing devices. The software modules may be executed by the same processor or by discrete processors of the same or different computing devices.

For the purposes of interpreting this specification, when referring to elements of various embodiments of the present invention, the articles "a", "an", "the" and "said" are intended to mean that there are one or more of the elements. The terms "comprising", "including", "having", "entailing" and "involving", and verb tense variants thereof, are intended to be inclusive and open-ended by which it is meant that there may be additional elements other than the listed elements.

This invention has been described in terms of specific implementations and configurations which are intended to be exemplary only. Persons of ordinary skill in the art will appreciate that many obvious variations, refinements and modifications may be made without departing from the inventive concepts presented in this application. The scope of the exclusive right sought by the Applicant(s) is therefore intended to be limited solely by the appended claims.

## Claims

1. A computerized simulation system for training a pilot to operate a vehicle with the guidance of a traffic controller, the system comprising:
a memory storing a machine learning model trained to generate traffic control instructions based on the state of the vehicle and pilot communications;
a processor communicatively coupled to:
the memory; and
an interactive computerized simulation station operable by the pilot to control a simulation model of the vehicle,
the processor being configured to perform iteratively and in real-time the steps of:
inputting situational data into the machine learning model to generate simulated traffic control instructions, the situational data comprising a state of the simulation model and a pilot communication recorded by the station while the pilot operates the station; and
providing the simulated traffic control instructions to the station for communication to the pilot.

2. The system of claim 1 wherein the processor also provides a cognitive assistant cooperating with the user to interact with the simulated traffic controller.

3. The system of claim 1 or 2 wherein the simulated vehicle is a simulated aircraft and the simulated traffic controller is a simulated air traffic controller located at a fixed virtual location at a virtual airfield in the simulation.

4. The system of claim 2 wherein the simulated vehicle is a simulated aircraft, the simulated traffic controller is a simulated air traffic controller, and the cognitive assistant is a virtual co-pilot that autonomously interacts with the user and the simulated air traffic controller.

5. The system of claim 2 wherein the simulated vehicle is a simulated aircraft, the simulated traffic controller is a simulated air traffic controller, and the cognitive assistant is a virtual instructor that autonomously interacts with the user.

6. The system of claim 3 wherein the simulated air traffic controller has a traffic controller artificial intelligence that is trained using reinforcement learning (RL) by tracking a flight safety parameter and by rewarding or penalizing the traffic controller artificial intelligence based on the flight safety parameter wherein the flight safety parameter is one of intra-aircraft separation distance, battery state, and fuel state.

7. A non-transitory computer-readable medium storing code which when executed by a processor of a computing device causes the computing device to:
provide a simulation for a user to control a simulated vehicle; and
provide a simulated traffic controller in the simulation, the simulated traffic controller having a traffic controller artificial intelligence for interacting verbally with the user via the simulation to coordinate movement of the simulated vehicle.

8. The non-transitory computer-readable medium of claim 7 comprising code to provide a cognitive assistant cooperating with the user to interact with the simulated traffic controller.

9. The non-transitory computer-readable medium of claim 7 or 8 wherein the simulated vehicle is a simulated aircraft and the simulated traffic controller is a simulated air traffic controller located at a fixed virtual location at a virtual airfield in the simulation.

10. A computerized simulation system for training a user to operate a vehicle, the system comprising:
an interactive computerized simulation station for providing a simulation to train the user in how to operate the vehicle, the interactive computerized simulation station having tangible instrumentation enabling the user to control a simulated vehicle in the simulation;
a memory storing simulation data for the simulation;
a processor communicatively coupled to the memory and configured to execute the simulation by providing:
a simulated traffic controller having a traffic controller artificial intelligence for interacting verbally with the user via the simulation to coordinate movement of the simulated vehicle.

11. The system of claim 10 wherein the processor also provides a cognitive assistant cooperating with the user to interact with the simulated traffic controller.

12. The system of claim 10 or 11 wherein the processor is further configured to execute the simulation as a multi-agent simulation by providing one or more simulated external vehicles that simulate one or more external vehicles, each simulated external vehicle being operated by an autonomous agent having an autonomous agent artificial intelligence for controlling the simulated external vehicle whose movement in the multi-agent simulation is determined by observations and decisions made by the autonomous agent artificial intelligence and by reacting to one or more verbal instructions received by the simulated traffic controller.

13. The system of any one of claims 10 to 12 wherein the simulated vehicle is a simulated aircraft and the simulated traffic controller is a simulated air traffic controller located at a fixed virtual location at a virtual airfield in the simulation.

14. The system of claim 11 wherein the cognitive assistant is a virtual co-pilot that autonomously interacts with the user and the simulated air traffic controller.

15. The system of claim 11 wherein the cognitive assistant is a virtual instructor that autonomously interacts with the user.
